**Europäisches Patentamt**

**European Patent Office**

**Office européen des brevets**

(19)

(11) Veröffentlichungsnummer : **0 466 226 B1**

(12)

# EUROPÄISCHE PATENTSCHRIFT

(45) Veröffentlichungstag der Patentschrift :
**23.02.94 Patentblatt 94/08**

(51) Int. Cl.$^5$ : **G01G 9/00,** G01J 5/52,
G01N 21/84

(21) Anmeldenummer : **91201512.0**

(22) Anmeldetag : **17.06.91**

(54) Verfahren zur Ermittlung des Flächengewichtes von Konversionsschichten.

(30) Priorität : **09.07.90 DE 4021792**

(43) Veröffentlichungstag der Anmeldung :
**15.01.92 Patentblatt 92/03**

(45) Bekanntmachung des Hinweises auf die
Patenterteilung :
**23.02.94 Patentblatt 94/08**

(84) Benannte Vertragsstaaten :
**DE FR GB**

(56) Entgegenhaltungen :
**EP-A- 0 195 168**
**DE-A- 3 014 774**
**DE-U- 8 904 068**
**US-A- 3 413 474**
**US-A- 4 831 258**

(73) Patentinhaber : **METALLGESELLSCHAFT Aktiengesellschaft**
**Postfach 10 15 01, Reuterweg 14**
**D-60015 Frankfurt (DE)**
(84) **DE GB**
Patentinhaber : **Société Continentale Parker**
**51, Rue Pierre**
**F-92111 Clichy (FR)**
(84) **FR**

(72) Erfinder : **Hauffe, Dieter**
**Wilhelm-Busch Strasse 60**
**W-6000 Frankfurt am Main 50 (DE)**

(74) Vertreter : **Rieger, Harald, Dr.**
**Reuterweg 14**
**D-60323 Frankfurt (DE)**

## Beschreibung

Die Erfindung betrifft ein Verfahren zur Ermittlung des Flächengewichtes von Konversionsschichten, insbesondere von Phosphatschichten, auf Metallen.

Konversionsschichten auf Metallen finden in der Industrie u.a. zur Erhöhung des Korrosionsschutzes, als Haftgrund für Lacke, zur Erleichterung der spanlosen Kaltumformung und von Einlaufvorgängen sowie zur elektrischen Isolation umfangreiche Anwendung. Besondere Bedeutung haben Schichten auf Basis der Phosphate von Zn, Mn, Fe, Ca, Ni, Mg und anderer Kationen erlangt, wobei in der Schicht ein oder mehrere dieser Kationen vorhanden sein können.

Eine wichtige Kenngröße der Konversionsschichten ist ihr Flächengewicht, da für die unterschiedlichen Anwendungsgebiete unterschiedliche Wertbereiche dieser Kenngröße zu optimalen Ergebnissen führen und für eine störungsfreie Serienproduktion diese Kenngröße in einem mehr oder weniger engen Bereich gehalten werden muß.

Für die Messung des Flächengewichts, das üblicherweise in g Schichtsubstanz pro $m^2$ Oberfläche ($g/m^2$) angegeben wird, eigenen sich die Ablösemethode mit Differenzwägung bzw. mit chemisch-analytischer Bestimmung einer oder mehrerer Schichtkomponenten, die Röntgenfluoreszenz, die Infrarotabsorption, die GDOS und andere Methoden. Das Ablöseverfahren ist eine zerstörende Prüfung und deshalb für die Produktionskontrolle weniger geeignet. Röntgenfluoreszenz, Infrarotabsorption und Glow Discharge Optical Spectroscopy erfordern aufwendige und kostspielige Analysengeräte. Tastsondengeräte auf Basis der Schwächung der Haftkraft eines Permanentmagneten, der Beeinflussung des magnetischen Flusses oder der Schwächung der Induktion eines hochfrequenten Wechselstromes sind in der Regel für Konversionsschichten weniger geeignet, da zum einen die Tastköpfe die Schicht lokal beschädigen können und zum anderen die Meßgenauigkeit in dem Schichtdickenbereich der Konversionsschichten gering ist.

Weiterhin ist es aus der UA-A-3413474 bekannt, Plastikschichtdicken oder - Flächengewichte auf Papier aus der Wärmeabstrahlung nach einer Wärmebestrahlung zu ermitteln.

Aufgabe der Erfindung ist es, ein Verfahren zur Ermittlung des Flächengewichtes von Konversionsschichten, insbesondere Phosphatschichten, auf Metallen bereitzustellen, das sich gegenüber den herkömmlichen Methoden durch Schnelligkeit, Zerstörungsfreiheit und durch die Verwendung einfacher technischer Hilfsmittel auszeichnet.

Die Aufgabe wird gelöst, indem das Verfahren der eingangs genannten Art entsprechend der Erfindung derart ausgestaltet wird, daß bei einer Temperatur zwischen 15 und 50°C mit Hilfe eines elektrischen, nicht wellenlängensensitiven Infrarotdetektors periodisch die Wärmestrahlung der trockenen, mit der Konversionsschicht bedeckten Oberfläche der Temperatur T und die Wärmestrahlung einer Referenzfläche oder eines Referenzhohlraumes der Temperatur T + t gemessen werden und aus der Höhe des resultierenden elektrischen Wechselsignals das Flächengewicht der Konversionsschicht ermittelt wird.

Unter Konversionsschicht im Sinne der Erfindung werden anorganische und gemischt anorganisch-organische Schichten auf Metallen verstanden, deren Bildung durch chemische Reaktion einer vorwiegend wäßrigen Lösung mit der Metalloberfläche bewirkt wurde. Typische Beispiele sind Schichten von Chromaten, Phosphaten, Oxiden, Oxalaten, komplexen Fluoriden etc.

Die Metalle, auf denen die Schichten vorliegen, können verschiedenster Art sein, z.B. Eisen, Stahl, Edelstahl, Zink, Zinklegierungen, Aluminium, Aluminiumlegierungen, Magnesium, Magnesiumlegierungen, Titan, Titanlegierungen, Zirkonium und dessen Legierungen. Von größter technischer Bedeutung sind jedoch Stahl, niedrig legierter Stahl, verzinkter Stahl, legierungsverzinkter Stahl, aluminierter Stahl, legierungsaluminierter Stahl sowie Aluminium und dessen Legierungen.

Unter elektrischen, nicht wellenlängenselektiven Infrarotdetektoren werden solche verstanden, die zumindest weitgehend unabhängig von dem Strahlungsspektrum der jeweils zu messenden Oberfläche die einfallende Infrarotstrahlung in elektrische Signale umsetzen, wobei die Höhe der Signale zumindest in einem bestimmten Energiebereich zu der Intensität der einfallenden Infrarotstrahlung proportional ist. Diese Eigenschaft hat u.a. den Vorteil, nach entsprechender Eichung Oberflächen mit Konversionsschichten unterschiedlichen Emissionsspektrums messen zu können.

Zur Messung wird der Infrarotdetektor periodisch auf die zu messende, mit Konversionsschicht bedeckte Oberfläche und eine Referenzfläche oder einen Referenzhohlraum gerichtet, deren Temperaturen sich um den Betrag t unterscheiden. Hierbei ist es notwendig, daß die Oberflächen trocken sind, da dünne Wasserfilme durch Eigenstrahlung die Meßwerte verfälschen würden. Der periodische Wechsel wird vorzugsweise durch mechanische Maßnahmen, z.B. mit schwenkbarem Spiegel, rotierender Lochscheibe oder Schiebeverschluß erreicht und so realisiert, daß sich ein Wechselsignal von etwa 10 bis 0,5 Hz ergibt. Die Höhe des elektrischen Wechselsignals wird - gegebenenfalls nach entsprechender Verstärkung und Glättung - auf das Flächengewicht der Konversionsschicht geeicht. Die Eichung kann natürlich auch auf andere, dem Flächengewicht pro-

2

portionale Größen, z.B. Gehalt an bestimmten Komponenten in der Schicht oder die Schichtdicke erfolgen.

Für die Eichung der zur Durchführung des erfindungsgemäßen Verfahrens bestimmten Meßeinrichtung wird vorzugsweise so vorgegangen, daß die Meß-Signale für die Oberflächenzustände "blankes Metall", "Metall mit Konversionsschichten" unterschiedlicher, z.B. mit der Ablösemethode bestimmter Flächengewichte und "schwarze Oberflächen für Infrarot" aufgenommen werden. Eine entsprechend durchgeführte Eichung für z.B. Zinkphosphatschichten auf Stahl führt zu einer Kurve, mit deren Hilfe den für einzelne Prüfbleche erhaltenen Meßwerten die tatsächlichen Flächengewichte zugeordnet werden können. Das erfindungsgemäße Verfahren ist geeignet, verläßliche Aussagen im Flächengewichtsbereich von etwa 1 bis 8 g/m² zu liefern. Der Zustand "schwarze Oberfläche für Infrarot" kann dabei z.B. durch 30 bis 100 µm einer Schicht einer weiß pigmentierten Kunstharzdispersionsfarbe realisiert werden. Es besteht auch die Möglichkeit, die Eichung mit dem Oberflächenzustand "blankes Metall" zu unterlassen.

Die Temperaturdifferenz t zwischen Meßobjekt und Referenz wird zweckmäßigerweise in die Bereiche + 15 bis + 3°C bzw. - 15 bis - 3°C gelegt. Es hat sich hierbei als vorteilhaft erwiesen, die Temperatur T der zu messenden, mit Konversionsschicht bedeckten Oberfläche auf Umgebungstemperatur zu halten und die Referenz zu erwärmen.

In einer bevorzugten Ausführungsform der Erfindung erfolgt die Messung der Wärmestrahlung mit einem Infrarotdetektor, dessen Sensor aus einer pyroelektrischen Polyvinylidenfluorid-Folie besteht.

Die Erfindung wird anhand der Figuren 1 bis 3 beispielsweise und näher erläutert.

Es zeigen

Figur 1        eine Meßvorrichtung in schematischer Darstellung,

Figur 2        eine durch Eichung ermittelte graphische Darstellung der Extinktion (E) in Abhängigkeit vom gravimetrisch bestimmtem Flächengewicht,

Figur 3        die Darstellung der Skala eines Anzeigegerätes mit Eichung in Flächengewichtseinheiten.

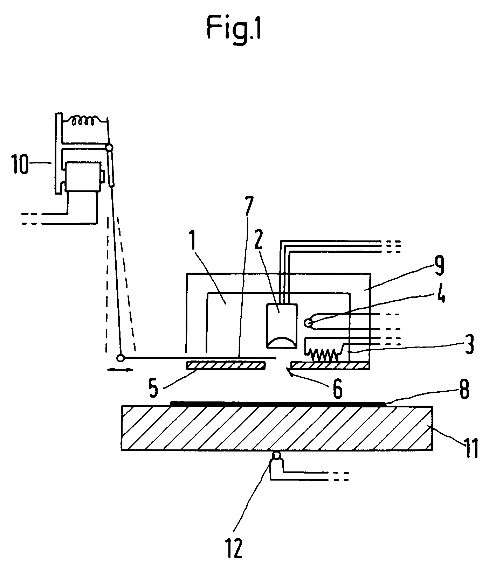

Die in Figur 1 beispielsweise dargestellte Meßvorrichtung besitzt eine Meßkammer (1), in der sich der handelsübliche IR-Detektor PID 11 (2) befindet. Dessen Sensor besteht aus einer pyroelektrischen Polyvinylidenfluorid-Folie. Das Innere der Meßkammer (1) wird mit Hilfe des Heizwiderstandes (3) und der Temperaturmeßeinrichtungen (4) auf z.B. + 6°C gegenüber der Umgebungstemperatur gehalten. In der nach unten die Meßkammer abschließenden Cu-Platte (5) befindet sich ein Fenster (6), das durch den Abdeckschieber (7) jeweils z.B. 0,5 sec. geöffnet und 0,5 sec geschlossen wird. Unter der Meßkammer (1) befindet sich das auf der Unterlage (11) liegende Prüfblech (8). Beide weisen Raumtemperatur auf. Die exakte Temperatur wird mit der Temperaturmeßeinrichtung (12) ermittelt. Der Abstand der Unterlage (11) von der Cu-Platte (5) beträgt etwa 15 mm. Mit (9) ist die Wärmeisolation der Meßkammer (1) und mit (10) ein von einem Zeitgeber gesteuerter Elektromagnet bezeichnet.

Im Betrieb liefert der IR-Detektor (2) während des Überganges vom Zustand "geschlossen" zum Zustand "offen" einen Spannungsimpuls, dessen Höhe von der Öffnungsgeschwindigkeit und der Differenz der Wärmestrahlung zwischen der Prüfblechoberfläche (8) und dem Innern der Meßkammer (1) bestimmt wird. Beim Schließen des Fensters resultiert ein entgegengesetzter Spannungsimpuls.

Die Meßsignale werden als eine Wechselspannung von 1 Hz verstärkt. Die für ein blankes Prüfblech (8) gemessene Wechselspannung wird als "0 %" und die für ein Prüfblech (8) mit IR-schwarzer Oberfläche wird mit "100 % definiert. Prüfbleche mit Zinkphosphatschichten unterschiedlichen Flächengewichtes ergeben Meßwerte "X %", die zwischen Null und 100 % liegen. Aus den Meßwerten X für die Prüfbleche mit den Phosphatschichten unterschiedlicher Flächengewichte wurden die Extinktionen E entsprechend der Gleichung

$$E = -\log\left(1 - \frac{X}{100}\right)$$

errechnet.

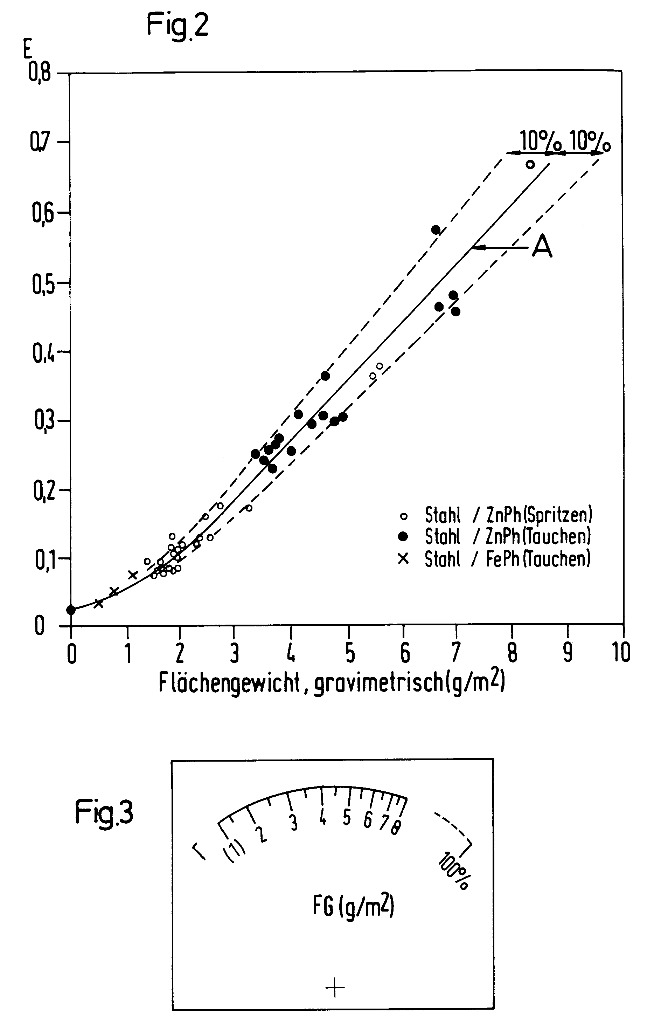

Figur 2 enthält die Extinktionen E der einzelnen Phosphatschichten gegen die nach dem Ablöseverfahren gravimetrisch ermittelten Flächengewichte FG (g/cm²) aufgetragen. Mit Hilfe der Ausgleichskurve (A) läßt sich eine Skala zeichnen, die das gemessene Wechselstromsignal direkt in das gesuchte Flächengewicht der Phosphatschicht umsetzt. Eine derartige Skala ist in Figur 3 dargestellt.

Das erfindungsgemäße Verfahren eignet sich für die schnelle, verläßliche und zerstörungsfreie Bestimmung des Flächengewichtes und damit proportionaler Kenngrößen von Konversionsschichten von Metallen und hat sich z.B. zur Produktionskontrolle von Phosphatschichten auf Karosserien, Gehäusen von Haushaltsgeräten, Blechteilen und Band hervorragend bewährt.

## Patentansprüche

1.    Verfahren zur Ermittlung des Flächengewichtes von Konversionsschichten, insbesondere Phosphatschichten, auf Metallen, dadurch gekennzeichnet, daß bei einer Temperatur zwischen 15 und 50°C mit Hilfe eines elektrischen, nicht wellenlängenselektiven Infrarotdetektors periodisch die Wärmestrahlung der trockenen, mit der Konversionsschicht bedeckten Oberfläche der Temperatur T und die Wärmestrahlung einer Referenzfläche oder eines Referenzhohlraumes der Temperatur T + t gemessen werden und aus der Höhe des resultierenden elektrischen Wechselsignales das Flächengewicht der Konversionsschicht ermittelt wird.

2. Verfahren nach Anspruch 1, dadurch gekennzeichnet, daß die Temperatur t auf einen Wert im Bereich von + 15 bis + 3°C oder - 15 bis - 3°C eingestellt wird.

3. Verfahren nach Anspruch 1 oder 2, dadurch gekennzeichnet, daß die Messung der Wärmestrahlung mit einem Infrarotdetektor erfolgt, dessen Sensor aus einer pyroelektrischen Polyvinylidenfluorid-Folie besteht.

4. Verfahren nach Anspruch 1, 2 oder 3, dadurch gekennzeichnet, daß zur Eichung die Oberflächen von blankem Metall, von Metall mit Konversionsschichten unterschiedlichen Flächengewichtes und eine für Infrarotstrahlung schwarze Oberfläche verwendet wird.

## Claims

1. A method for determining the weight per unit surface area of conversion layers, in particular phosphate layers, on metals, characterised in that the heat radiation of temperature T of the dry surface which is covered with the conversion layer and the heat radiation of temperature T + t of a reference surface or of a reference cavity is periodically measured at a temperature of between 15 and 50°C with the aid of an electric infrared detector which is not wavelength-selective, and the weight per unit surface area of the conversion layer is determined from the amplitude of the resulting electric alternating signal.

2. A method according to Claim 1, characterised in that the temperature t is set to a value in the range of + 15 to + 3°C or - 15 to - 3°C.

3. A method according to Claim 1 or 2, characterised in that the heat radiation is measured with an infrared detector, the sensor of which consists of a pyroelectric polyvinylidene fluoride sheet.

4. A method according to Claim 1, 2 or 3, characterised in that the surfaces of bare metal, of metal with conversion layers of different weights per unit surface area and a surface which is black to infrared radiation are used for calibration.

## Revendications

1. Procédé de détermination du poids superficiel de couches de conversion, en particulier de couches de phosphate, sur des métaux, caractérisé en ce que l'on mesure, à une température comprise entre 15 et 50°C, à l'aide d'un détecteur infrarouge électrique non sélectif des longueurs d'ondes, périodiquement, le rayonnement thermique de la surface séchée revêtue de la couche de conversion de température T et le rayonnement thermique d'une surface de référence ou d'un espace creux de référence de température T + t et on détermine le poids superficiel de la couche de conversion à partir de la hauteur du signal alternatif électrique obtenu.

2. Procédé selon la revendication 1, caractérisé en ce que la température t est réglée à une valeur dans la plage de + 15 à + 3°C ou de - 15 à - 3°C.

3. Procédé selon la revendication 1 ou 2, caractérisé en ce que la mesure du rayonnement thermique se fait à l'aide d'un détecteur infrarouge dont le capteur est constitué d'une feuille de fluorure de polyvinylidène pyroélectrique.

4. Procédé selon la revendication 1, 2 ou 3, caractérisé en ce que l'on utilise pour l'étalonnage des surfaces de métal blanc, de métal avec des couches de conversion de différents poids spécifiques et une surface noire au rayonnement infrarouge.

# Fig.1

Fig.2

Flächengewicht, gravimetrisch(g/m²)

Legende:
- ○ Stahl / ZnPh(Spritzen)
- ● Stahl / ZnPh(Tauchen)
- × Stahl / FePh(Tauchen)

Fig.3

FG (g/m²)